# EUROPEAN PATENT SPECIFICATION

(11) **EP 3 599 148 B1**
(45) Date of publication and mention of the grant of the patent: **29.12.2021**
(21) Application number: 19181688.3
(22) Date of filing: 21.06.2019
(51) Int. Cl.: B62J 17/10, B62M 7/02, B62K 11/04

(54) **STRADDLED VEHICLE**
GRÄTSCHSITZFAHRZEUG
VÉHICULE À ENFOURCHER

(30) Priority: 24.07.2018 JP 2018138673
(43) Date of publication of application: 29.01.2020
(73) Proprietor: YAMAHA HATSUDOKI KABUSHIKI KAISHA, Iwata-shi, Shizuoka 438-8501 (JP)
(72) Inventor: KITAGAWA, Masahiko, Iwata-shi, Shizuoka 438-8501 (JP)
(74) Representative: Grünecker Patent- und Rechtsanwälte PartG mbB

(56) References cited:
- EP-A1- 1 785 344
- EP-A1- 2 719 613
- EP-A1- 2 835 308
- US-A1- 2009 218 152
- US-A1- 2013 015 007
- US-A1- 2013 161 970
- US-A1- 2018 148 122

## Description

The present invention relates to a straddled vehicle.

There is a straddled vehicle that includes an air cleaner and an air passage for introducing traveling air to the air cleaner. For example, the straddled vehicle disclosed in Japan Patent Laid-open Patent Publication 2006-17090, an air passage extending from the air cleaner in a vehicle front-rear direction of the vehicle is provided. The air passage has an open air introducing port, and the open air introducing port is open toward the front of the vehicle.

The inventor of the present invention considered attaching a side cover for guiding air to the air cleaner to a side surface of a straddled vehicle in order to improve an intake efficiency to the air cleaner. In order to attach the side cover to the side of the straddled vehicle, it is conceivable to support the side cover by a stay extending from a vehicle body frame. However, in this case, a vehicle weight increases because the stay becomes longer. In addition, in order to increase a support rigidity of the side cover, it is necessary to make the stay strong. In that case, the vehicle weight will further increase.

In document EP 2 835 308 A1 a front cowl stay is enabled to be attached to the vehicle body side without making its structure complicated while sufficiently ensuring the capacity of a member such as an air cleaner and the like disposed in the peripheries of a head pipe and the front portion of main frames and desired to ensure its capacity. For this, an air cleaner is disposed to straddle a pair of left and right main frames. A front cowl stay is fastened to the vehicle body side by means of a stay-use front fastening portion fastened to the front portion of a head pipe, a stay-use left fastening portion fastened to a left side portion of the air cleaner and a stay-use right fastening portion fastened to the right side portion of the air cleaner.

Document EP 1 785 344 A1 relates to a motorcycle comprising a head pipe, a pair of left and right tank rails that extend from the head pipe in a vehicle rear direction providing a frame shape, in which a head pipe neighboring section of the tank rails becomes narrower, and a body cover that is provided on a vehicle outer side of the left and right tank rails, wherein the body cover includes a front side neighboring section that is adjacent to a front side outer side section of the left and the right tank rails, a rear side neighboring section that is adjacent to the rear side outer side sections, and an overhanging surface that protrudes outwards in the vehicle width direction with respect to the front side outer side sections of the tank rails.

EP 1 785 344 A1 discloses the following features of claim 1; a straddled vehicle, comprising: a head pipe; a steering device rotatably supported by the head pipe; a fuel tank disposed behind the head pipe; a seat disposed behind the fuel tank; an air cleaner disposed below the fuel tank or the seat; a side cover including an air passage for guiding air to the air cleaner, and an intake port communicating with the air passage and opening forward, at least a portion of the side cover being disposed to a lateral side of the fuel tank; and a radiator unit disposed below the side cover, wherein the radiator unit includes a supporting portion that supports the side cover,an elastic body is attached to the supported portion, and has a hole into which the pin member is inserted, an opening is provided on a bottom surface of the supported portion, and the elastic body is fitted into the opening.

Document EP 2 719 613 A1 relates to a saddle-straddling type motor vehicle comprising a pair of right and left main frames extending to the rearward of the vehicle from a head pipe, a fuel tank which is arranged on the pair of main frames, a tank cover which is provided to overlap with the fuel tank when seen in plan view, a pair of right and left side covers which is provided to overlap with the pair of main frames when seen in side view wherein the tank cover has a pair of right and left outer side portions positioned outside of outer surfaces of the pair of main frames when seen in plan view, and side cover supporters, provided at the pair of outer side portions, that respectively support the pair of side covers.

In is an object of the present invention is to improve an intake efficiency by means of a side cover in a straddled vehicle, and to obtain high support rigidity of the side cover while suppressing an increase in a vehicle weight. According to the present invention said object is solved by a straddled vehicle having the features of independent claim 1. Preferred embodiments are laid down in the dependent claims.

A straddled vehicle according to one aspect includes a head pipe, a steering device, a fuel tank, a seat, an air cleaner, and a side cover. The steering device is rotatably supported by the head pipe. The fuel tank is disposed behind the head pipe. The seat is disposed behind the fuel tank. The air cleaner is disposed below the fuel tank or the seat. The side cover includes an air passage and an intake port. The air passage guides air to the air cleaner. The intake port communicates with the air passage and opens forward. At least a portion of the side cover is disposed to a lateral side of the fuel tank. The radiator unit is disposed below the side cover. The radiator unit includes a supporting portion that supports the side cover. The side cover includes a supported portion supported by the supporting portion. The supporting portion is provided with a pin member, the pin member protrudes upward from the supporting portion, extends in a vehicle up-down direction, and is made of metal, an elastic body is attached to the supported portion, and has a hole into which the pin member is inserted, an opening is provided on a bottom surface of the supported portion, and the elastic body is fitted into the opening.

In the straddled vehicle according to this aspect, the air taken in from the intake port of the side cover is guided to the air cleaner through the air passage. Thereby, an intake efficiency to the air cleaner can be improved. Also, the radiator unit is disposed below the side cover and includes a supporting portion that supports the side cover. Therefore, high support rigidity of the side cover can be obtained while suppressing an increase in a vehicle weight. The supported portion of the side cover can be supported by the supporting portion of the radiator unit by a contact between the pin member and the hole.

The steering device may include a front suspension that extends obliquely rearward and upward. In a vehicle front view, the supported portion may be disposed outward in a vehicle width direction of the front suspension. When the side cover is supported by a stay extending from a vehicle body frame and the supported portion of the side cover is disposed outward in the vehicle width direction of the front suspension, the vehicle weight increases because the stay becomes longer. However, in the straddled vehicle according to this aspect, by supporting the side cover with the supporting portion provided in the radiator unit, it is possible to obtain high support rigidity of the side cover while suppressing the increase in the vehicle weight.

A dimension of the hole may be set such that the pin member is movable in the vehicle up-down direction and the movement of the pin member in the vehicle width direction is restricted. In this case, the movement in the vehicle width direction can be restricted while the movement of the side cover in the vehicle up-down direction is released.

The hole may have an elongated hole shape extending in a vehicle front-rear direction. In this case, the side cover can be easily moved in the vehicle front-rear direction. Thereby, a movement of the side cover in the vehicle front-rear direction can be released.

The radiator unit may include a radiator body for cooling a cooling water and a stay attached to the radiator body. The supporting portion may be provided on the stay. In this case, a degree of freedom in an arrangement of the supporting portion can be improved.

The stay and the supporting portion may be made of metal. In this case, support strength by the supporting portion can be improved.

The radiator unit may further include a radiator cover disposed to a lateral side of the radiator body. The radiator cover may be attached to the stay. In this case, a support of the side cover and a support of the radiator cover can be performed by the common stay.

The stay may extend to a position forward of the radiator body. The supporting portion may be located forward of the radiator body. In this case, the side cover can be formed into a large shape extending to the position forward of the radiator body. Thereby, the intake efficiency can be improved. In addition, the side cover can be firmly supported by the supporting portion.

### BRIEF DESCRIPTION OF THE DRAWINGS

- FIG. 1: is a side view of a straddled vehicle.
- FIG. 2: is a front view of the straddled vehicle.
- FIG. 3: is a top view of a tank cover and a side cover.
- FIG. 4: is a side view of the side cover.
- FIG. 5: is a front view of the side cover.
- FIG. 6: is a bottom view of the side cover.
- FIG. 7: is an enlarged side view of a front portion of the straddled vehicle.
- FIG. 8: is an enlarged front view of the front portion of the straddled vehicle.
- FIG. 9: is a front view of a left side cover and a radiator unit.
- FIG. 10: is a front view of a radiator body.
- FIG. 11: is a perspective view of the radiator body.
- FIG. 12: is a left side view of the radiator body.
- FIG. 13: is a right side view of the radiator body.
- FIG. 14: is an enlarged side view showing the left side cover and the radiator unit.
- FIG. 15: is an enlarged front view showing the left side cover and the radiator unit.
- FIG. 16: is an enlarged bottom view of the left side cover.

### DETAILED DESCRIPTION OF THE PREFERRED EMBODIMENTS

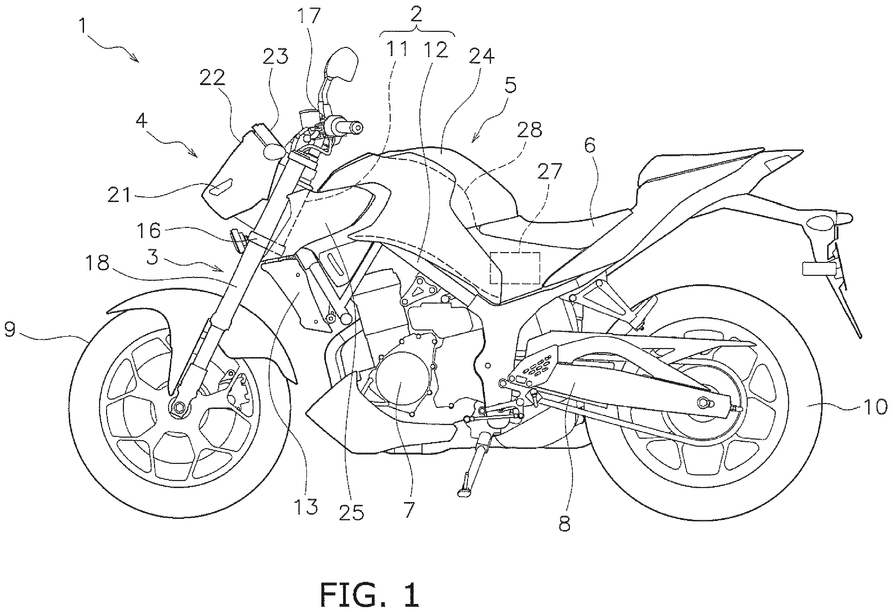

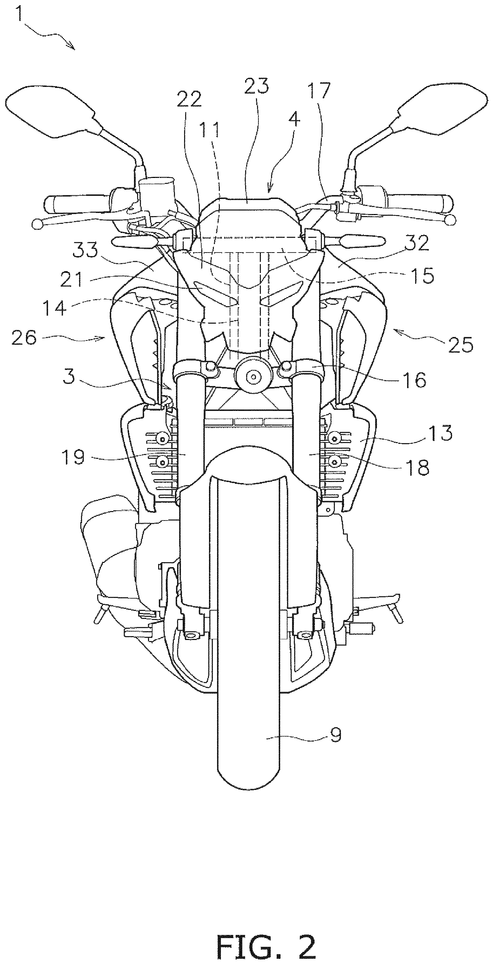

Hereinafter, a straddled vehicle according to an embodiment will be described with reference to the drawings. FIG. 1 is a side view of a straddled vehicle 1 according to the embodiment. FIG. 2 is a front view of the straddled vehicle 1 according to the embodiment. The straddled vehicle 1 according to the embodiment is a so-called road sport type motorcycle. As shown in FIG. 1, the straddled vehicle 1 includes a vehicle body frame 2, a steering device 3, a headlight unit 4, a fuel tank 5, a seat 6, an engine 7, a swing arm 8, a front wheel 9, a rear wheel 10 and a radiator unit 13.

The vehicle body frame 2 includes a head pipe 11 and a body frame 12. The head pipe 11 rotatably supports the steering device 3. The body frame 12 is connected to the head pipe 11 and extends rearward from the head pipe 11. The body frame 12 supports the fuel tank 5, the seat 6, and the engine 7.

The fuel tank 5 is disposed behind the head pipe 11. The seat 6 is disposed behind the fuel tank 5. The engine 7 is disposed below the fuel tank 5. The radiator unit 13 is disposed in front of the engine 7. The swing arm 8 is rotatably supported by the engine 7 or the body frame 12. The swing arm 8 rotatably supports the rear wheel 10.

As shown in FIG. 2, the steering device 3 includes a steering shaft 14, an upper bracket 15, a lower bracket 16, a handle 17, and front suspensions 18 and 19. The steering shaft 14 is inserted into the head pipe 11 and is rotatably supported by the head pipe 11. The upper bracket 15 and the lower bracket 16 are attached to the steering shaft 14.

The handle 17 is connected to an upper portion of the steering shaft 14 via the upper bracket 15. The front suspensions 18 and 19 are supported by the upper bracket 15 and the lower bracket 16. The front suspensions 18 and 19 rotatably support the front wheel 9. In a vehicle side view, the front suspensions 18 and 19 extend obliquely rearward and upward.

The headlight unit 4 is disposed in front of the handle 17. The headlight unit 4 is attached to the steering device 3. The headlight unit 4 includes a headlight 21, a headlight cover 22, and a meter 23.

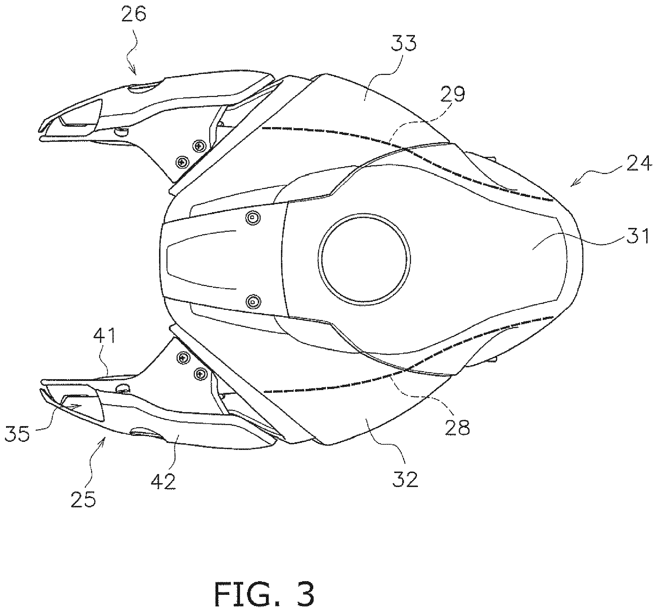

The straddled vehicle 1 includes a tank cover 24, a left side cover 25, and a right side cover 26 (see FIG. 2). FIG. 3 is a top view of the tank cover 24 and the left and right side covers 25 and 26. The tank cover 24 is attached to the fuel tank 5. The tank cover 24 includes a central tank cover 31, a left tank cover 32, and a right tank cover 33. The central tank cover 31 is disposed above and behind the fuel tank 5. The left tank cover 32 and the right tank cover 33 are disposed to a lateral side of the fuel tank 5. In the vehicle side view, the left tank cover 32 and the right tank cover 33 overlap with the fuel tank 5. The left tank cover 32 is disposed to the left side of the fuel tank 5. The right tank cover 33 is disposed to the right side of the fuel tank 5.

As shown in FIG. 1, the straddled vehicle 1 includes an air cleaner 27 and a first air passage 28. The air cleaner 27 is disposed below the seat 6. The air cleaner 27 purifies an intake air to the engine 7. The first air passage 28 guides air to the air cleaner 27. The first air passage 28 is disposed to the lateral side of the fuel tank 5. The first air passage 28 is provided between the fuel tank 5 and the tank cover 24.

The left side cover 25 is connected to the left tank cover 32. At least a portion of the left side cover 25 is disposed to the lateral side of the fuel tank 5. The left side cover 25 is connected to the first air passage 28.

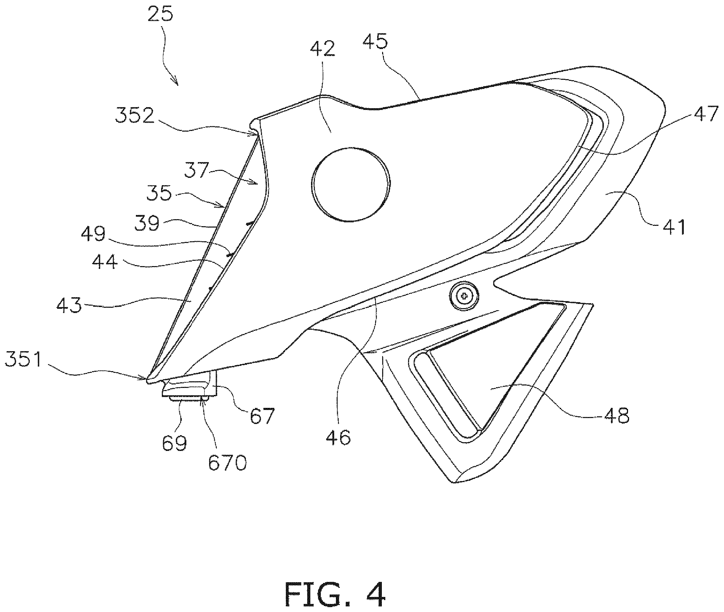

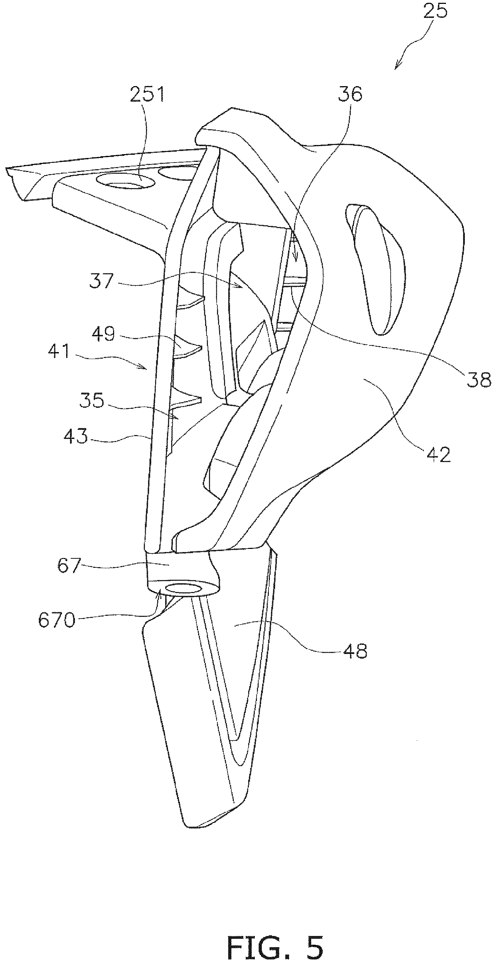

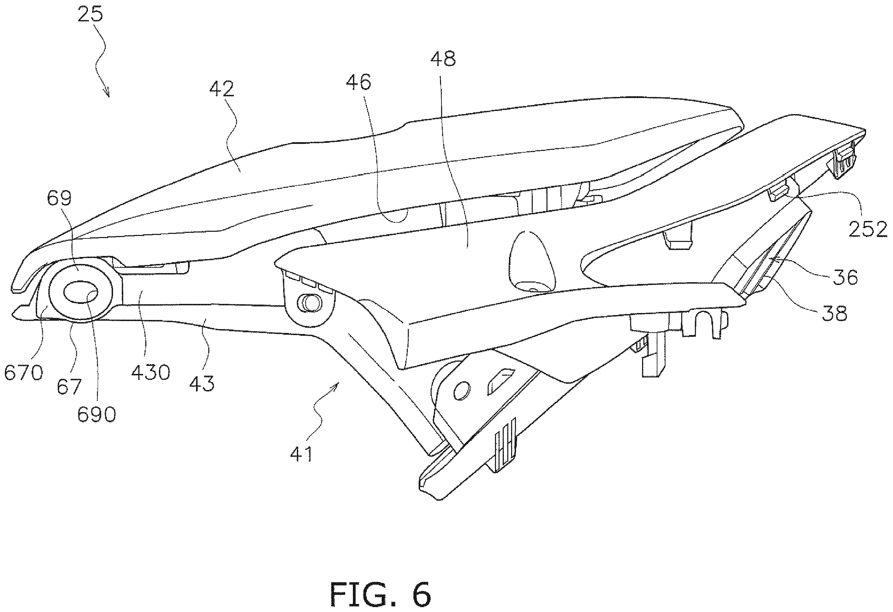

FIG. 4 is a side view of the left side cover 25. FIG. 5 is a front view of the left side cover 25. FIG. 6 is a bottom view of the left side cover 25. As shown in FIGS. 4 to 6, the left side cover 25 includes an intake port 35, an exhaust port 36 and a second air passage 37. The intake port 35 is provided at the front of the left side cover 25. The intake port 35 opens forward.

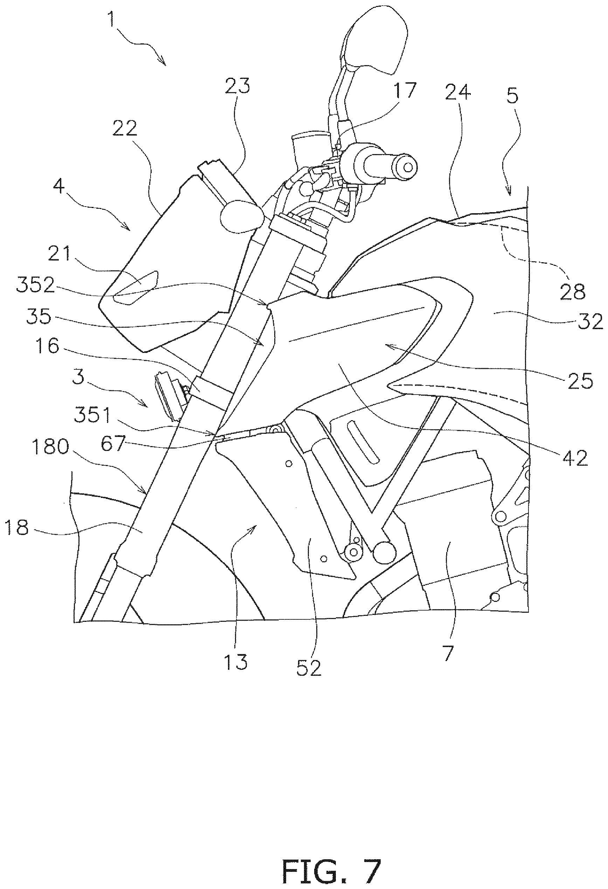

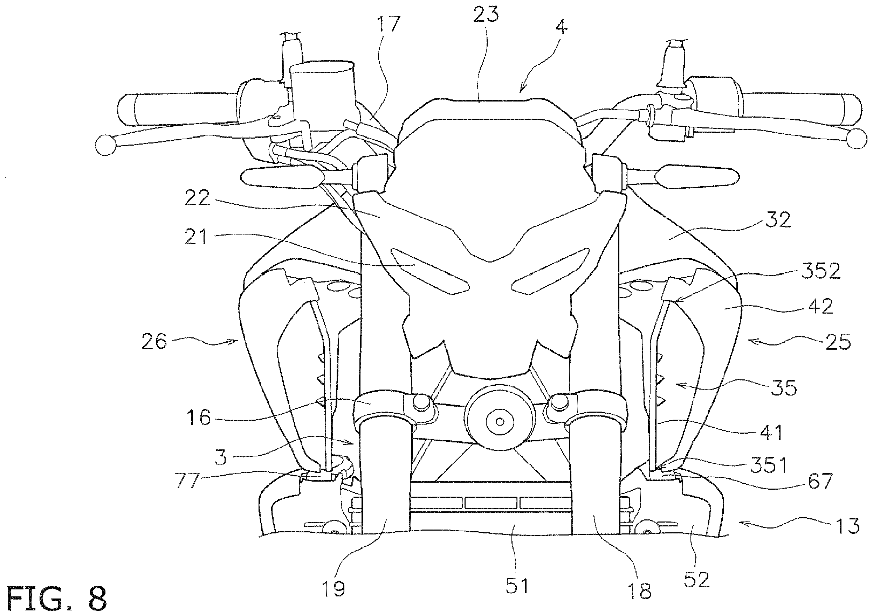

FIG. 7 is an enlarged side view of a front portion of the straddled vehicle 1. FIG. 8 is an enlarged front view of the front portion of the straddled vehicle 1. As shown in FIG. 7, the intake port 35 is disposed rearward of the front suspension 18 in the vehicle side view. Specifically, in the vehicle side view, the intake port 35 is disposed rearward of a front edge 180 of the front suspension 18. In the vehicle side view, the intake port 35 is disposed to be inclined rearward and upward together with the front suspension 18.

As shown in FIG. 8, in the vehicle front view, the entire intake port 35 is disposed outward of the front suspension 18 in the vehicle width direction. In the vehicle front view, a lower end 351 of the intake port 35 is located lower than the lower bracket 16. In the vehicle front view, an upper end 352 of the intake port 35 is located higher than the lower bracket 16. In the vehicle front view, the lower end 351 of the intake port 35 is located lower than a lower end of the headlight unit 4. In the vehicle front view, the upper end 352 of the intake port 35 is located higher than the lower end of the headlight unit 4.

As shown in FIGS. 5 and 6, the exhaust port 36 is provided at the rear of the left side cover 25. The exhaust port 36 opens rearward. The exhaust port 36 is disposed in the left tank cover 32 so as to face the first air passage 28. The exhaust port 36 communicates with the first air passage 28. The left side cover 25 includes a lattice member 38. The lattice member 38 is provided across the exhaust port 36. The second air passage 37 is provided inside the left side cover 25. The second air passage 37 connects the intake port 35 and the exhaust port 36.

The left side cover 25 includes an inner cover 41 and an outer cover 42. The inner cover 41 is attached to the tank cover 24. The inner cover 41 constitutes one inner side surface of the second air passage 37. The outer cover 42 constitutes the other inner side surface of the second air passage 37. The intake port 35 described above is provided across the inner cover 41 and the outer cover 42. As shown in FIGS. 7 and 8, the exhaust port 36 is provided in the inner cover 41.

The outer cover 42 is disposed outward of the inner cover 41 in the vehicle width direction. The outer cover 42 is separate from the inner cover 41 and is detachably attached to the inner cover 41. The outer cover 42 overlaps with the inner cover 41 in the vehicle side view. At least a portion of the outer cover 42 overlaps with the exhaust port 36 in the vehicle side view. The radiator unit 13 is disposed below the outer cover 42 in the vehicle side view.

As shown in FIG. 4, the outer cover 42 includes a front edge 44, an upper edge 45, a lower edge 46, and a rear edge 47. The front edge 44 of the outer cover 42 constitutes the intake port 35 together with the front edge 39 of the inner cover 41. The front edge 44 extends rearward and upward. The upper edge 45 of the outer cover 42 extends rearward and upward. The lower edge 46 of the outer cover 42 extends rearward and upward. The rear edge 47 has a shape bent rearward.

The inner cover 41 includes a first inner cover portion 43 and a second inner cover portion 48. The first inner cover portion 43 is disposed inward of the outer cover 42 in the vehicle width direction. The first inner cover portion 43 overlaps with the outer cover 42 in the vehicle side view. The second inner cover portion 48 is disposed below the first inner cover portion 43. The second inner cover portion 48 is disposed below the outer cover 42. The second inner cover portion 48 does not overlap with the outer cover 42 in the vehicle side view.

The first inner cover portion 43 includes a plurality of ribs 49. The plurality of ribs 49 respectively protrude from an inner surface of the inner cover 41 into the second air passage 37. The plurality of ribs 49 are disposed rearward of the intake port 35 and extend rearward and upward. The plurality of ribs 49 guide the air drawn from the intake port 35 and flowing through the second air passage 37. In the drawings, only one of the plurality of ribs 49 is given the reference numeral 49.

As shown in FIG. 5, the left side cover 25 includes a first fixing portion 251. The first fixing portion 251 is provided on the inner cover 41. The first fixing portion 251 is provided on an upper surface of the inner cover 41. The first fixing portion 251 is fixed to the tank cover 24. Specifically, the first fixing portion 251 has a hole, and is fixed to the tank cover 24 by a screw that passed through the hole of the first fixing portion 251.

As shown in FIG. 6, the left side cover 25 includes a plurality of second fixing portions 252. The second fixing portions 252 are provided on the inner cover 41. The second fixing portions 252 are provided along a rear edge of the inner cover 41. The second fixing portions 252 are fixed to the tank cover 24. Specifically, the second fixing portions 252 respectively have a projecting shape, and are fixed to the tank cover 24 by locking in holes provided in the tank cover 24. In the drawings, only one of the plurality of second fixing portions 252 is given the reference numeral 252.

The configuration of the first air passage 28 passing the left of the fuel tank 5 and the left side cover 25 has been described above, but as shown in FIG. 3, a first air passage 29 similar to the first air passage 28 is provided in the right tank cover 24. The right side cover 26 is connected to the first air passage 29 in the right tank cover 33, and has a symmetrical structure with the left side cover 25.

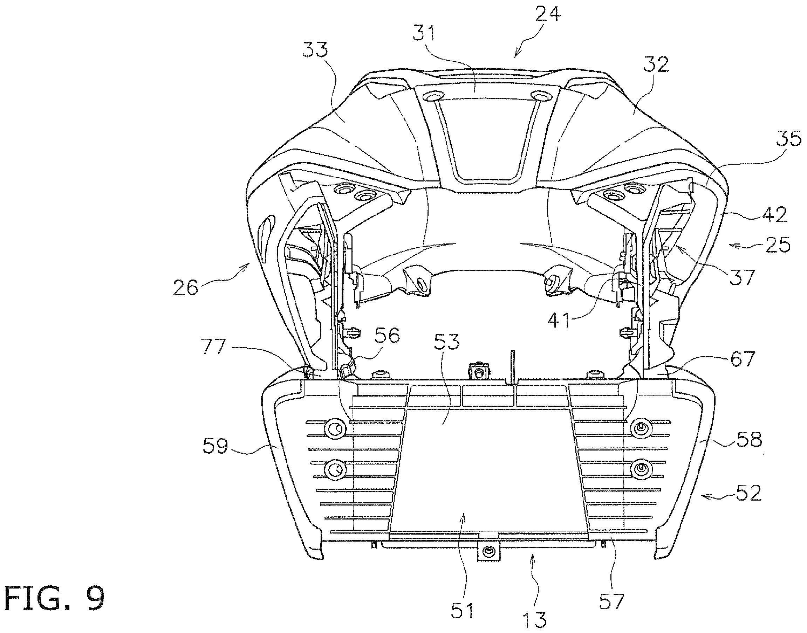

Next, support structures of the side covers 25 and 26 will be described. In the straddled vehicle 1 according to the present embodiment, the front portions of the side covers 25 and 26 are supported by the radiator unit 13. FIG. 9 is a front view of the left side cover 25 and the radiator unit 13. As shown in FIGS. 7 to 9, the radiator unit 13 is disposed below the left side cover 25. The radiator unit 13 includes a radiator body 51 and a radiator cover 52.

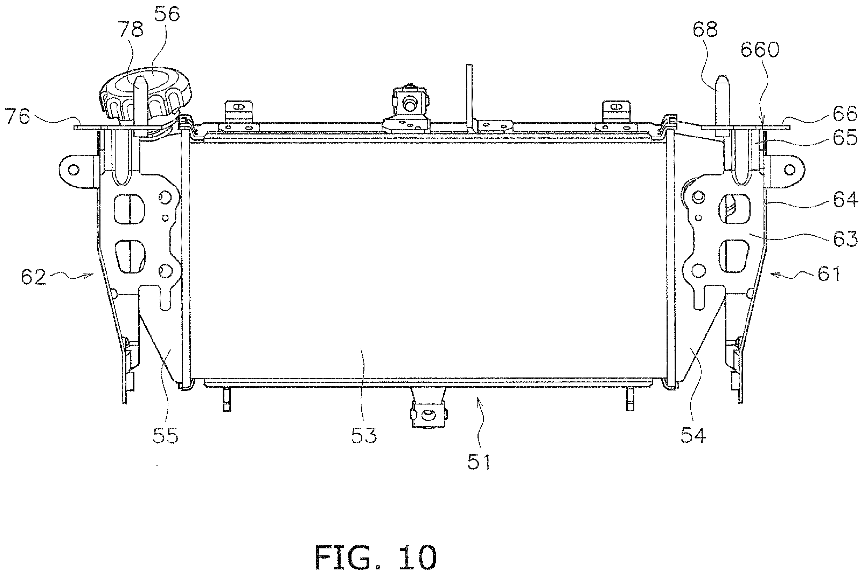

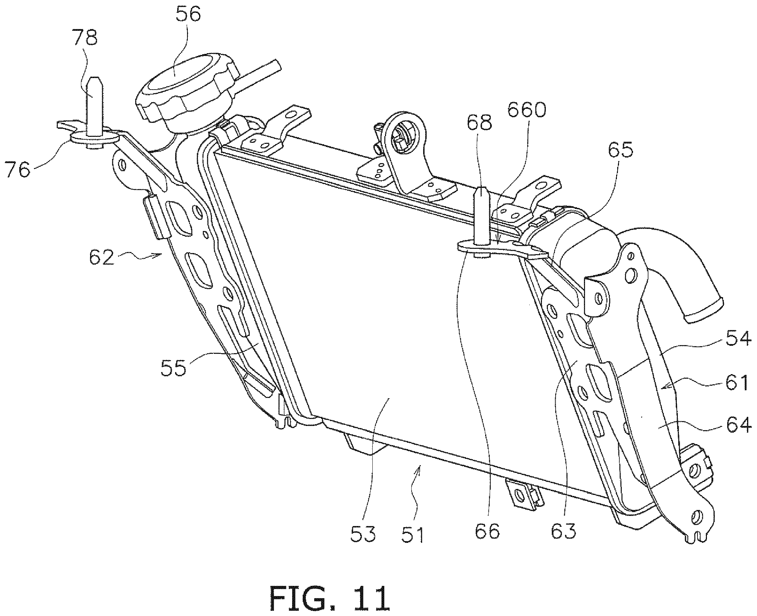

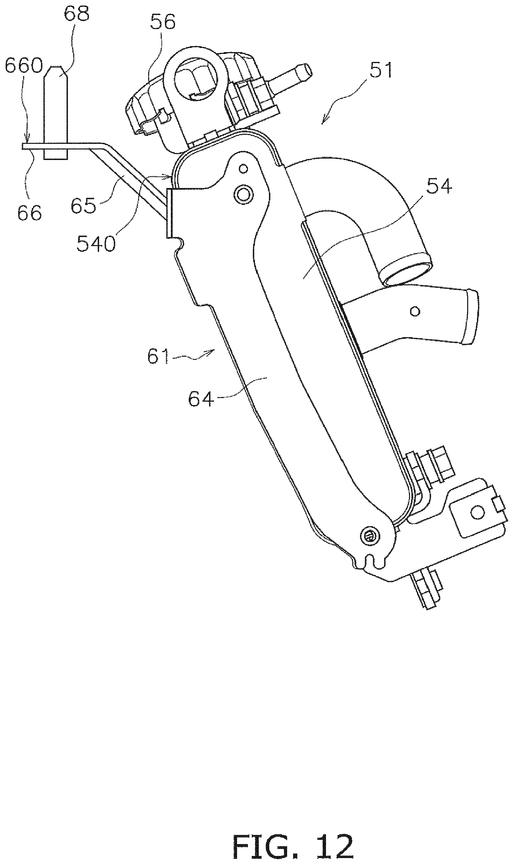

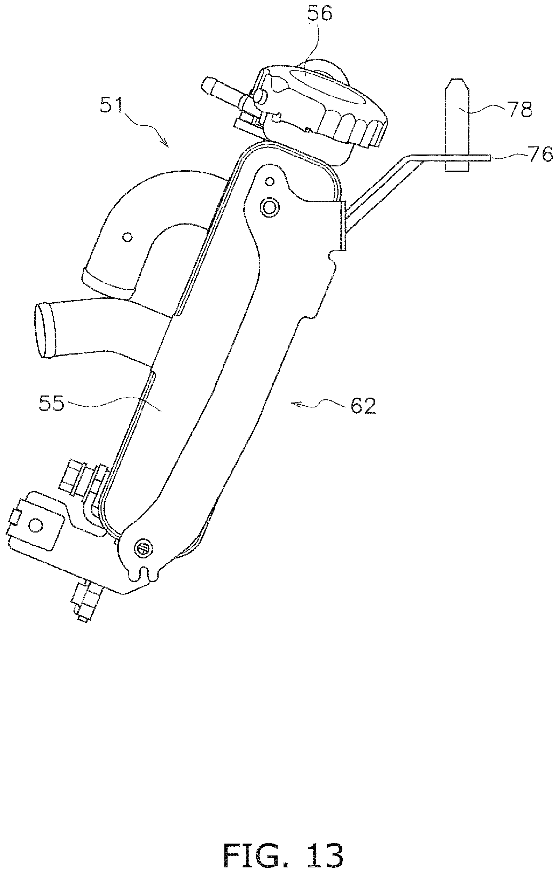

FIG. 10 is a front view of the radiator body 51. FIG. 11 is a perspective view of the radiator body 51. FIG. 12 is a left side view of the radiator body 51. FIG. 13 is a right side view of the radiator body 51. As shown in FIGS. 10 and 11, the radiator body 51 includes a radiator core 53, a first tank portion 54, and a second tank portion 55.

The radiator core 53 is disposed between the first tank portion 54 and the second tank portion 55. The radiator core 53 includes a plurality of fins (not shown) and a tube passing through the fins. The radiator core 53 cools a cooling water from the engine 7. The first tank portion 54 is disposed to the left side of the radiator core 53. The second tank portion 55 is disposed to the right side of the radiator core 53. A radiator cap 56 is attached to the second tank portion 55.

The radiator cover 52 is attached to the radiator body 51. As shown in FIG. 9, the radiator cover 52 includes a radiator body cover 57, a first radiator side cover 58, and a second radiator side cover 59. The radiator body cover 57 overlaps with a portion of the radiator body 51 in the vehicle front view. Specifically, the radiator body cover 57 overlaps with the first tank portion 54 and the second tank portion 55 in the vehicle front view. The first radiator side cover 58 and the second radiator side cover 59 overlap with the radiator body 51 in the vehicle side view. The first radiator side cover 58 is disposed to the left side of the first tank portion 54. The second radiator side cover 59 is disposed to the right side of the second tank portion 55.

As shown in FIGS. 10 to 13, the radiator unit 13 includes a first stay 61 and a second stay 62. The first stay 61 and the second stay 62 are attached to the radiator body 51. The first stay 61 is attached to the first tank portion 54. The second stay 62 is attached to the second tank portion 55. The first stay 61 and the second stay 62 are made of metal.

The first stay 61 includes a front face portion 63 and a side face portion 64. The front face portion 63 is disposed in front of the radiator body 51. In the vehicle front view, the front face portion 63 overlaps with the radiator body 51. Specifically, the front face portion 63 is disposed in front of the first tank portion 54. In the vehicle front view, the front face portion 63 overlaps with the first tank portion 54. The radiator body cover 57 is attached to the front face portion 63.

The side face portion 64 is disposed to a lateral side of the radiator body 51. The side face portion 64 is disposed to the left side of the radiator body 51. In the vehicle side view, the side face portion 64 overlaps with the radiator body 51. Specifically, the side face portion 64 is disposed to the left side of the first tank portion 54. In the vehicle side view, the side face portion 64 overlaps with the first tank portion 54. The first radiator side cover 58 is attached to the side face portion 64. The front face portion 63 and the side face portion 64 are made of metal. Specifically, the front face portion 63 and the side face portion 64 are made of sheet metal.

The first stay 61 includes an arm portion 65 and a supporting portion 66. The arm portion 65 and the supporting portion 66 are made of metal. The arm portion 65 is connected to the front face portion 63 and extends forward and upward from the front face portion 63. The arm portion 65 extends to a position forward of the radiator body 51.

The supporting portion 66 is connected to the arm portion 65. An upper surface 660 of the supporting portion 66 has a flat shape extending in a vehicle front-rear direction and the vehicle width direction. The supporting portion 66 supports the left side cover 25. As shown in FIG. 12, the supporting portion 66 is located forward of the radiator body 51. The supporting portion 66 is located higher than a front end 540 of the first tank portion 54.

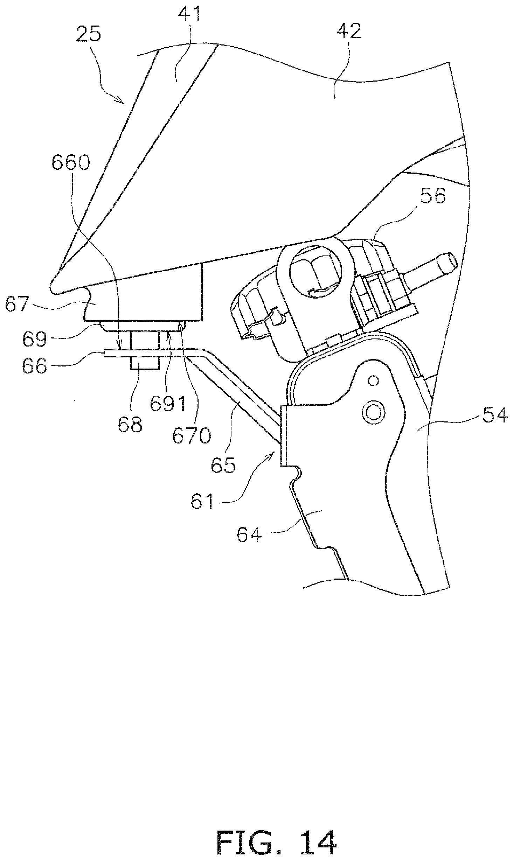

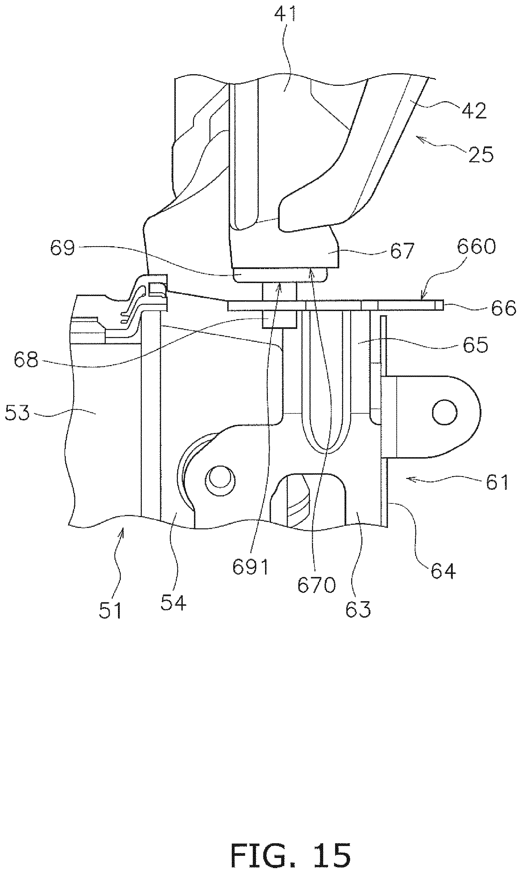

FIG. 14 is an enlarged side view showing the left side cover 25 and the radiator unit 13. FIG. 15 is an enlarged front view showing the left side cover 25 and the radiator unit 13. Note that the radiator cover 52 is omitted in FIGS. 14 and 15. As shown in FIGS. 14 and 15, the left side cover 25 includes a supported portion 67. The supported portion 67 is supported by the supporting portion 66 of the radiator unit 13.

The supported portion 67 is provided on the inner cover 41. As shown in FIG. 6, the supported portion 67 is connected to a front of a bottom surface 430 of the first inner cover portion 43. The supported portion 67 protrudes downward from the bottom surface 430 of the first inner cover portion 43. As shown in FIG. 4, in the vehicle side view, a bottom surface 670 of the supported portion 67 is located lower than the lower end 351 of the intake port 35. In the vehicle side view, the supported portion 67 is located rearward of the lower end 351 of the intake port 35. In the vehicle side view, the supported portion 67 is located forward of the upper end 352 of the intake port 35.

As shown in FIGS. 7 and 8, the supported portion 67 is disposed lower than the lower bracket 16. In the vehicle side view, the supported portion 67 is disposed rearward of the front suspension 18. In the vehicle front view, the supported portion 67 is disposed outward of the front suspension 18 in the vehicle width direction. In the vehicle front view, the supported portion 67 does not overlap with the front suspension 18.

As shown in FIGS. 10 to 12, the supporting portion 66 is provided with a pin member 68. The pin member 68 protrudes upward from the supporting portion 66. The pin member 68 extends in a vehicle up-down direction. The pin member 68 is made of metal.

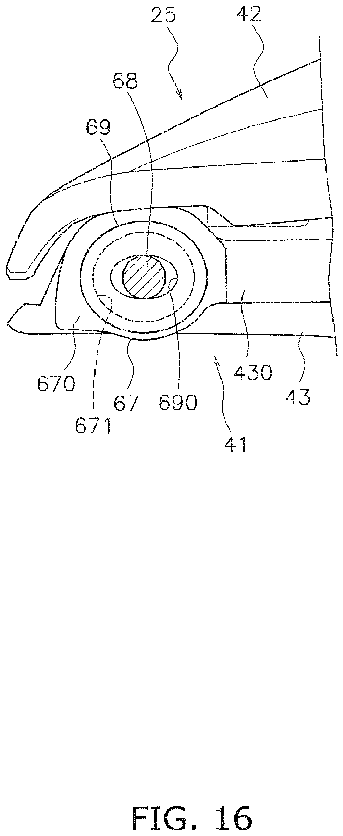

FIG. 16 is an enlarged bottom view of the left side cover 25. Note that in FIG. 16, the pin member 68 is shown in cross section. As shown in FIGS. 14 to 16, an elastic body 69 is attached to the supported portion 67. The elastic body 69 is made of, for example, rubber. However, the elastic body 69 may be formed of a material other than rubber. An opening 671 is provided on the bottom surface 670 of the supported portion 67. The elastic body 69 is fitted into the opening 671. The elastic body 69 has a hole 690. The pin member 68 is inserted into the hole 690.

A play is provided between the pin member 68 and the hole 690. Specifically, as shown in FIG. 16, the hole 690 has an elongated hole shape extending in the vehicle front-rear direction. In the vehicle front-rear direction, the play is provided between the pin member 68 and the hole 690. Therefore, the pin member 68 is movable in the vehicle front-rear direction with respect to the supported portion 67. The hole 690 penetrates the elastic body 69 in the vehicle up-down direction. A dimension of the hole 690 is set such that the pin member 68 is movable in the vehicle up-down direction and a movement of the pin member 68 in the vehicle width direction is restricted.

As shown in FIGS. 14 and 15, a portion of the elastic body 69 protrudes downward from the bottom surface 670 of the supported portion 67. A portion of the elastic body 69 is located between the supported portion 67 and the supporting portion 66. A bottom surface 691 of the elastic body 69 is located higher than the upper surface 660 of the supporting portion 66. A gap is provided between the bottom surface 691 of the elastic body 69 and the upper surface 660 of the supporting portion 66. Further, the bottom surface 670 of the supported portion 67 is located higher than the upper surface 660 of the supporting portion 66. A gap is provided between the bottom surface 670 of the supported portion 67 and the upper surface 660 of the supporting portion 66.

In the straddled vehicle 1 according to the present embodiment described above, the air taken in from the intake port 35 of the left side cover 25 is guided to the air cleaner 27 through the second air passage 37 and the first air passage 28. Thereby, an intake efficiency to the air cleaner 27 can be improved. The radiator unit 13 is disposed below the left side cover 25 and includes the supporting portion 66 that supports the left side cover 25. Therefore, high support rigidity of the left side cover 25 can be obtained while suppressing an increase in a vehicle weight.

In the vehicle front view, the supported portion 67 is disposed outward of the front suspension 18 in the vehicle width direction. When the side cover is supported by a stay extending from the vehicle body frame 2 and the supported portion 67 of the left side cover 25 is disposed outward of the front suspension 18 in the vehicle width direction, the stay becomes longer and the vehicle weight will increase. However, in the straddled vehicle 1 according to the present embodiment, since the left side cover 25 is supported by the supporting portion 66 provided in the radiator unit 13, the first stay 61 can be shortened. Thus, high support rigidity of the left side cover 25 can be obtained while suppressing an increase in the vehicle weight.

The pin member 68 of the supporting portion 66 is inserted into the hole 690 of the supported portion 67. Therefore, the supported portion 67 of the left side cover 25 can be supported by the supporting portion 66 of the radiator unit 13 by a contact of the pin member 68 and the hole 690. In addition, the play is provided between the pin member 68 and the hole 690. Therefore, a movement of the left side cover 25 can be released by the play between the pin member 68 and the hole 690.

The pin member 68 extends in the vertical up-down direction. Also, the dimension of the hole 690 are set such that the pin member 68 being movable in the vehicle up-down direction and the movement of the pin member 68 in the vehicle width direction is restricted. Therefore, the movement in the vehicle width direction can be restricted while the movement of the left side cover 25 in the vehicle up-down direction is released. Hole 690 has an elongated hole shape extending in the vehicle front-rear direction. Therefore, the left side cover 25 can be easily moved in the vehicle front-rear direction. Thereby, the movement of the left side cover 25 in the vehicle front-rear direction can be released.

The supporting portion 66 is provided to the first stay 61 attached to the radiator body 51. Therefore, a degree of freedom in an arrangement of the supporting portion 66 can be improved. The first stay 61 is made of metal, and the supporting portion 66 is made of metal. Therefore, support strength by the supporting portion 66 can be improved.

The radiator cover 52 is attached to the first stay 61. Therefore, a support of the left side cover 25 and a support of the radiator cover 52 can be performed by the common first stay 61.

The first stay 61 extends to the position forward of the radiator body 51. The supporting portion 66 is located forward of the radiator body 51. Therefore, the left side cover 25 can be formed into a large shape extending to the position forward of the radiator body 51. Thereby, the intake efficiency can be improved. In addition, the left side cover 25 can be firmly supported by the supporting portion 66.

The elastic body 69 is disposed between the supporting portion 66 and the supported portion 67. Therefore, wear between the supporting portion 66 and the supported portion 67 can be suppressed.

The support structure of the left side cover 25 and its effects have been described above, but the right side cover 26 also has the same support structure, and the same effect can be obtained by the support structure of the right side cover 26. The support structure of the right side cover 26 is the same as the support structure of the left side cover 25 except that it is bilaterally symmetrical. That is, the second stay 62 has a symmetrical structure with the first stay 61. The second stay 62 includes a supporting portion 76, and the supporting portion 76 is provided with a pin member 78. The supporting portion 76 and the pin member 78 of the second stay 62 are arranged bilaterally symmetrical with the supporting portion 66 and the pin member 68 of the first stay 61. The right side cover 26 includes a supported portion 77, and the supported portion 77 of the right side cover 26 has a symmetrical structure with the supported portion 67 of the left side cover 25.

The configuration of the side covers 25 and 26 may be changed. For example, the shape or arrangement of the outer cover 42 may be changed. The shape or arrangement of the inner cover 41 may be changed. The shape or arrangement of the intake port 35 may be changed.

The configuration of the tank cover 24 may be changed. Alternatively, the tank cover 24 may be omitted. The first air passage 28 may be configured by a part other than the tank cover 24. The arrangement of the air cleaner 27 is not limited below the seat 6, the air cleaner 27 may be disposed below the fuel tank 5.

Support structures of the left and right side covers 25 and 26 may be changed within the scope of the appended claims.

## Claims

1. A straddled vehicle (1), comprising:
a head pipe (11);
a steering device (3) rotatably supported by the head pipe (11);
a fuel tank (5) disposed behind the head pipe (11);
a seat (6) disposed behind the fuel tank (5);
an air cleaner (27) disposed below the fuel tank (5) or the seat (6);
a side cover (25, 26) including an air passage (37) for guiding air to the air cleaner (27), and an intake port (35) communicating with the air passage (37) and opening forward, at least a portion of the side cover (25, 26) being disposed to a lateral side of the fuel tank (5); and
a radiator unit (13) disposed below the side cover (25, 26), wherein
the radiator unit (13) includes a supporting portion (66, 76) that supports the side cover (25, 26),
the side cover (25, 26) includes a supported portion (67, 77) directly supported from below by the supporting portion (66),
the supporting portion (66) is provided with a pin member (68),
the pin member (68) protrudes upward from the supporting portion (66), extends in a vehicle up-down direction, and is made of metal,
an elastic body (69) is attached to the supported portion (67), and has a hole (690) into which the pin member (68) is inserted,
an opening (671) is provided on a bottom surface (670) of the supported portion (67), and
the elastic body (69) is fitted into the opening (671)

2. The straddled vehicle (1) according to claim 1, wherein
the steering device (3) includes a front suspension (18, 19) that extends obliquely rearward and upward, and
in a vehicle front view, the supported portion (67, 77) is disposed outward of the front suspension (18) in a vehicle width direction.

3. The straddled vehicle (1) according to claim 1 or 2, wherein a dimension of the hole (690) is set such that the pin member (68) is movable in the vehicle up-down direction and a movement of the pin member (68) in the vehicle width direction is restricted.

4. The straddled vehicle (1) according to any one of claims 1 to 3, wherein the hole (690) has an elongated hole shape extending in a vehicle front-rear direction.

5. The straddled vehicle (1) according to any one of claims 1 to 4, wherein
the radiator unit (13) includes
a radiator body (51) configured to cool a cooling water; and
a stay (61, 62) attached to the radiator body (51),
the supporting portion (66, 76) is provided on the stay (61).

6. The straddled vehicle (1) according to claim 5, wherein
the stay (61) is made of metal, and
the supporting portion (66, 76) is made of metal.

7. The straddled vehicle (1) according to claim 5 or 6, wherein
the radiator unit (13) further includes a radiator cover (52) disposed to a lateral side of the radiator body (51), and
the radiator cover (52) is attached to the stay (61).

8. The straddled vehicle (1) according to any one of claims 5 to 7, wherein
the stay (61) extends to a position forward of the radiator body (51), and
the supporting portion (66, 76) is located forward of the radiator body (51).

## Patentansprüche

1. Grätschsitz-Fahrzeug (1), umfassend:
ein Hauptrohr (11);
eine Lenkvorrichtung (3), die drehbar von dem Hauptrohr (11) gestützt wird;
einen Kraftstofftank (5), der hinter dem Hauptrohr (11) angeordnet ist;
einen Sitz (6), der hinter dem Kraftstofftank (5) angeordnet ist;
einen Luftfilter (27), der unter dem Kraftstofftank (5) oder dem Sitz (6) angeordnet ist;
eine Seitenabdeckung (25, 26), die einen Luftdurchlass (37) zum Leiten von Luft zu dem Luftfilter (27) und eine Einlassöffnung (35) enthält, die mit dem Luftdurchlass (37) in Verbindung steht und sich nach vorne öffnet, wobei mindestens ein Teil der Seitenabdeckung (25, 26) an einer Seite des Kraftstofftanks (5) angeordnet ist; und
eine Kühlereinheit (13), die unterhalb der Seitenabdeckung (25, 26) angeordnet ist, wobei
die Kühlereinheit (13) einen Stützabschnitt (66, 76) aufweist, der die Seitenabdeckung (25, 26) stützt,
die Seitenabdeckung (25, 26) einen gestützten Abschnitt (67, 77) aufweist, der direkt von unten durch den Stützabschnitt (66) gestützt wird,
der Stützabschnitt (66) mit einem Stiftelement (68) versehen ist,
das Stiftelement (68) nach oben aus dem Stützabschnitt (66) herausragt, sich in einer Aufwärts-/Abwärtsrichtung des Fahrzeugs erstreckt und aus Metall hergestellt ist,
ein elastischer Körper (69) an dem gestützten Abschnitt (67) angebracht ist und ein Loch (690) aufweist, in das das Stiftelement (68) eingeführt wird,
eine Öffnung (671) an einer Bodenfläche (670) des gestützten Abschnitts (67) vorgesehen ist, und
der elastische Körper (69) in die Öffnung (671) eingepasst ist.

2. Grätschsitz-Fahrzeug (1) nach Anspruch 1, wobei
die Lenkvorrichtung (3) eine vordere Aufhängung (18, 19) aufweist, die sich schräg nach hinten und nach oben erstreckt, und
in einer Vorderansicht des Fahrzeugs der abgestützte Abschnitt (67, 77) in einer Fahrzeugbreitenrichtung außerhalb der vorderen Aufhängung (18) angeordnet ist.

3. Grätschsitz-Fahrzeug (1) nach Anspruch 1 oder 2, wobei eine Abmessung des Lochs (690) so eingestellt ist, dass das Stiftelement (68) in der Aufwärtsrichtung des Fahrzeugs beweglich ist und eine Bewegung des Stiftelements (68) in Breitenrichtung des Fahrzeugs eingeschränkt ist.

4. Gespreiztes Fahrzeug (1) nach einem der Ansprüche 1 bis 3, wobei das Loch (690) eine Langlochform aufweist, die sich in einer Vorwärts-/Rückwärtsrichtung des Fahrzeugs erstreckt.

5. Grätschsitz-Fahrzeug (1) nach einem der Ansprüche 1 bis 4, wobei die Kühlereinheit (13) umfasst:
ein Kühlergehäuse (51), das so konfiguriert ist, dass es ein Kühlwasser kühlt; und
eine an dem Kühlergehäuse (51) angebrachte Strebe (61, 62),
wobei der Stützabschnitt (66, 76) an der Strebe (61) vorgesehen ist.

6. Grätschsitz-Fahrzeug (1) nach Anspruch 5, wobei
die Strebe (61) aus Metall hergestellt ist, und
der Stützabschnitt (66, 76) aus Metall hergestellt ist.

7. Grätschsitz-Fahrzeug (1) nach Anspruch 5 oder 6, wobei
die Kühlereinheit (13) ferner eine Kühlerabdeckung (52) aufweist, die an einer Seite des Kühlergehäuses (51) angeordnet ist, und
die Kühlerabdeckung (52) an der Strebe (61) befestigt ist.

8. Grätschsitz-Fahrzeug (1) nach einem der Ansprüche 5 bis 7, wobei
sich die Strebe (61) bis zu einer Position vor dem Kühlergehäuse (51) erstreckt, und
sich der Stützabschnitt (66, 76) vor dem Kühlergehäuse (51) befindet.

## Revendications

1. Véhicule à enfourcher (1), comprenant :
un tuyau de tête (11) ;
un dispositif de direction (3) supporté de manière rotative par le tuyau de tête (11) ;
un réservoir de carburant (5) disposé derrière le tuyau de tête (11) ;
un siège (6) disposé derrière le réservoir de carburant (5) ;
un filtre à air (27) disposé sous le réservoir de carburant (5) ou le siège (6) ;
un couvercle latéral (25, 26) comprenant un passage d'air (37) pour guider l'air vers le filtre à air (27), et un orifice d'admission (35) communiquant avec le passage d'air (37) et s'ouvrant vers l'avant, au moins une partie du couvercle latéral (25, 26) étant disposée sur un côté latéral du réservoir de carburant (5); et
une unité de radiateur (13) disposée sous le couvercle latéral (25, 26), dans laquelle
l'unité de radiateur (13) comprend une partie de support (66, 76) qui supporte le couvercle latéral (25, 26),
le couvercle latéral (25, 26) comprend une partie supportée (67, 77) directement supportée par le dessous par la partie support (66),
la partie de support (66) est pourvue d'un élément de broche (68),
l'élément de goupille (68) fait saillie vers le haut à partir de la partie de support (66), s'étend dans une direction de haut en bas du véhicule, et est constitué de métal,
un corps élastique (69) est fixé à la partie supportée (67), et présente un trou (690) dans lequel l'élément de broche (68) est inséré,
une ouverture (671) est prévue sur une surface inférieure (670) de la partie supportée (67), et
le corps élastique (69) est ajusté dans l'ouverture (671).

2. Véhicule à enfourcher (1) selon la revendication 1, dans lequel
le dispositif de direction (3) comprend une suspension avant (18, 19) qui s'étend obliquement vers l'arrière et vers le haut, et
dans une vue avant du véhicule, la partie supportée (67, 77) est disposée à l'extérieur de la suspension avant (18) dans une direction de largeur du véhicule.

3. Véhicule à enfourcher (1) selon la revendication 1 ou 2, dans lequel
une dimension du trou (690) est réglée de telle sorte que l'élément de goupille (68) est mobile dans la direction de montée et de descente du véhicule et un mouvement de l'élément de goupille (68) dans la direction de la largeur du véhicule est limité.

4. Véhicule à enfourcher (1) selon l'une quelconque des revendications 1 à 3, dans lequel
le trou (690) a une forme de trou allongé s'étendant dans une direction avant-arrière du véhicule.

5. Véhicule à enfourcher (1) selon l'une quelconque des revendications 1 à 4, dans lequel l'unité de radiateur (13) comprend
un corps de radiateur (51) configuré pour refroidir une eau de refroidissement; et
un étai (61, 62) fixé au corps du radiateur (51),
la partie de support (66, 76) est prévue sur l'étai (61).

6. Véhicule à enfourcher (1) selon la revendication 5, dans lequel
l'étai (61) est réalisé en métal, et
la partie de support (66, 76) est en métal.

7. Véhicule à enfourcher (1) selon la revendication 5 ou 6, dans lequel
l'unité de radiateur (13) comprend en outre un couvercle de radiateur (52) disposé sur un côté latéral du corps de radiateur (51), et
le couvercle du radiateur (52) est fixé à l'étai (61).

8. Véhicule à enfourcher (1) selon l'une quelconque des revendications 5 à 7, dans lequel
l'étai (61) s'étend jusqu'à une position en avant du corps de radiateur (51), et la partie de support (66, 76) est située en avant du corps de radiateur (51).
